## Europäisches Patentamt

## European Patent Office

## Office européen des brevets

(19)

(11) Veröffentlichungsnummer: **0 004 583**
**B1**

(12) **EUROPÄISCHE PATENTSCHRIFT**

(45) Veröffentlichungstag der Patentschrift:
06.10.82

(51) Int. Cl.³: **C 08 L 95/00, E 01 C 7/22**

(21) Anmeldenummer: 79100786.7

(22) Anmeldetag: 15.03.79

(54) Heiss zu verarbeitendes bituminöses Mischgut und Füller hierfür, insbesondere für den Strassenbau.

(30) Priorität: 08.04.78 DE 2815285
12.07.78 DE 2830612

(73) Patentinhaber: Rheinische Kalksteinwerke GmbH.,
Wilhelmstrasse 77, D-5603 Wülfrath (DE)

(43) Veröffentlichungstag der Anmeldung:
17.10.79 Patentblatt 79/21

(72) Erfinder: Bergmann, Klaus, Ing.grad., Menzelstrasse 16,
D-5628 Heiligenhaus (DE)
Erfinder: Schmitz, Friedrich, Dr. Dipl.-Chem., Zur
Hotzepaar 7, D-5603 Wülfrath (DE)
Erfinder: Kilian, Gottfried, Dipl.-Ing.,
Joh.Flintropstrasse 104, D-4020 Mettmann (DE)
Erfinder: Reppel, Heinz, Ing.grad., Memelerstrasse 27,
D-5603 Wülfrath (DE)

(45) Bekanntmachung des Hinweises auf die Patenterteilung:
06.10.82 Patentblatt 82/40

(84) Benannte Vertragsstaaten:
BE CH DE FR GB IT NL

(74) Vertreter: Wiensz, Klaus, Dr., Postfach 100 506,
D-4020 Mettmann (DE)

(56) Entgegenhaltungen:
CH-A-511 053
FR-A-1 203 956

Die Akte enthält technische Angaben, die nach dem
Eingang der Anmeldung eingereicht wurden und die
nicht in dieser Patentschrift enthalten sind.

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Heiß zu verarbeitendes bituminöses Mischgut und Füller hierfür, insbesondere für den Straßenbau

Die Erfindung betrifft ein heiß zu verarbeitendes bituminöses Mischgut, insbesondere für den Straßenbau sowie einen Füller für heiß zu verarbeitendes bituminöses Mischgut, ebenfalls insbesondere für den Straßenbau.

Es wird heute allgemein die Vorstellung vertreten, daß ein Straßenbelag um so stabiler ist, je mehr Verdichtungsarbeit aufgewendet werden muß, um eine gewünschte dichte Kornlagerung im fertigen Belag zu erreichen. Dazu ist ein hoher Arbeitsaufwand notwendig. Wenn der Belag zu schnell abkühlt, bleibt jedoch ein unerwünscht hoher Hohlraum zurück. Solche Beläge können dann nicht die erwartete hohe Lebensdauer aufweisen. Man hat daher schon vorgeschlagen, den Bitumengehalt zu erhöhen, um leichter die gewünschte Minerallagerung zu erreichen. Um in diesen Fällen die gewünschte Mörtelstabilität jedoch zu gewährleisten, muß ein härteres Bitumen eingesetzt werden, das zwangsläufig bei der Verdichtung einen erhöhten Energieaufwand erfordert, da die Einbauwilligkeit einer derartigen Mischung ungünstiger ist.

Der vorliegenden Erfindung liegt die Aufgabe zugrunde, die Einbauwilligkeit und Verdichtbarkeit eines bituminösen Mineralgemisches beim Heißeinbau zu verbessern, so daß ein Belag bei normaler Verdichtungsarbeit mit dichterer Kornlagerung gebaut werden kann, ohne daß härteres Bitumen in erhöhter Menge eingesetzt werden muß, oder daß der Belag zu Überfettungserscheinungen neigt.

Es wurde gefunden, daß diese Aufgabe durch die Verwendung von nichthygroskopischen kristallwasserhaltigen Stoffen als Zusatzstoffe zum Mischgut gelöst werden kann, wobei die Zusatzstoffe die Eigenschaft haben müssen, daß sie beim Erhitzen des Mischgutes auf Mischtemperatur ganz oder teilweise ihr Kristallwasser abgeben.

Die Wirkung der Zusatzstoffe ist am günstigsten je gleichmäßiger sie im Mischgut verteilt sind. Zur Verbesserung der Verteilung der Zusatzstoffe im Mischgut kann man sie zweckmäßig mit geeigneten Trägersubstanzen vormischen und diese Vormischung dann in das bituminöse Mischgut einbringen. Als Trägerstoffe kommen dabei beispielsweise in Frage: Asbest, Kieselgur, Gummimehl, Flugasche, feindisperse Kunststoffe, vorgetrockneter Sand und dergleichen.

Nach einer bevorzugten Ausführungsform der Erfindung ist das bituminöse Mischgut durch die Verwendung von Zusatzstoffen in solchen Mengen gekennzeichnet, daß deren bei Mischtemperatur abspaltbare Wassermenge 0,005 bis 0,1 Gew.-%, vorzugsweise 0,01 bis 0,03 Gew.-%, bezogen auf das Mischgut, beträgt.

Nach einer weiteren Ausführungsform der Erfindung kann die gestellte Aufgabe mit Hilfe eines Füllers für heiß zu verarbeitendes bituminöses Mischgut, insbesondere für den Straßenbau, gelöst werden, wenn der Füller nichthygroskopische kristallwasserhaltige Stoffe enthält, die beim Erhitzen des Füllers als Bestandteil des bituminösen Mischgutes auf Mischtemperatur ganz oder teilweise ihr Kristallwasser abgeben.

Diese Ausführungsform der Erfindung ist aus verschiedenen Gründen besonders günstig. Zum einen lassen sich die kristallwasserhaltigen Stoffe gut im bindemittelfrei hergestellten Füller durch einfaches Einmischen verteilen, und an der Mischerstation ist ein gesondertes Dosieren der kristallwasserhaltigen Stoffe nicht erforderlich. Die Mischzeiten werden verkürzt, und im fertigen Mischgut wird die Wirkung der kristallwasserhaltigen Stoffe beim nachfolgenden Einbau des Mischgutes verbessert.

Besonders günstig ist es, wenn der Füller die kristallwasserhaltigen Stoffe in solchen Mengen enthält, daß die freiwerdende Wassermenge 0,05 bis 1 Gew.-%, vorzugsweise 0,1 bis 0,3 Gew.-%, bezogen auf das Gewicht des Füllers, beträgt.

Die krstallwasserhaltigen nichthygroskopischen Stoffe bewirken, gleichgültig, ob sie dem bituminösen Mischgut direkt als Zusatzstoff zugemischt wurden oder ob sie mit Hilfe von Trägersubstanzen oder als Bestandteil von Füllern eingebracht wurden, daß sich das Mischgut besonders leicht und ohne größere Verdichtungsarbeit einbauen läßt und im eingebauten Zustand bisher nicht beobachtete vorteilhafte Eigenschaften aufweist. Dies ist besonders aus den Beispielen ersichtlich. Die Beispiele zeigen aber auch, daß unter vergleichbaren Bedingungen die Hohlraumgehalte erheblich vermindert, die Marshallstabilität deutlich erhöht und das Verformungsverhalten — ausgedrückt durch die Stempeleindringtiefe — sowohl bei niedrigen als auch bei hohen Temperaturen erheblich verbessert wird, so daß sogar frisch verlegte Beläge, die noch Temperaturen zwischen 80 und etwa 100°C auweisen, sofort und ohne Schaden für den Belag befahren werden können.

Gemäß der Erfindung ist es vorteilhaft, wenn kristallwasserhaltige Stoffe eingesetzt werden, die oberhalb der Einbautemperatur des bituminösen Mischgutes ihr Wasser abgeben. Es wird nämlich angenommen, daß die erzielbaren Vorteile durch abgespaltenes Kristallwasser verursacht werden. Die Reproduzierbarkeit der technischen Wirkung dieser Stoffe ist daher um so besser, je kontrollierbarer die Wasserabspaltung in der Wärme erfolgt.

Die oben angegebenen Mengen an Zusatzstoffen, ausgedrückt durch die Mengen an Wasser, welche bei Mischtemperatur beziehungsweise oberhalb der Einbautemperatur des bituminösen Mischgutes abgegeben werden und bezogen auf das bituminöse Mischgut beziehungsweise auf das Füllergewicht, gelten für übliche Beläge mit üblichen Füllergehalten. Innerhalb dieser Grenzen können die Mengen an kristallwasserhaltigen Stoffen, entsprechend dem Wasserabspaltungsverhalten der Stoffe und entsprechend den gewünschten Effekten, variiert werden. Für besondere Einsatzzwecke ist es vorteilhaft, wenn kristallwasserhaltige Stoffe eingesetzt werden, die das Wasser bei Temperaturen zwischen 80 und 160°C abgeben. Dies hat den Vorteil, daß unkontrollierte Wasserverluste vermieden werden und eine Vergleichmäßigung der Mastix-Eigenschaften bewirkt wird, weil das Wasser über einen größeren Temperaturbereich nach und nach abgegeben wird. Unter den in Frage kommenden kristallwasserhaltigen Stoffen hat sich besonders $CaSO_4 \cdot 2 H_2O$ (Gips-Dihydrat) bewährt. Dieser Stoff spaltet sein Wasser bei Temperaturen zwischen etwa 110 und 180°C ab.

Weitere in Frage kommende Stoffe sind nachfolgend beispielhaft aufgeführt:

| | |
|---|---|
| Aluminiumsulfat | $Al_2(SO_4)_3 \cdot 18 H_2O$ |
| Bariumchlorid | $BaCl_2 \cdot 2 H_2O$ |
| Calciumtrimetaphosphat | $Ca_3(P_3O_9)_2 \cdot 9 H_2O$ |
| Kaliumaluminiumsulfat | $KAl(SO_4)_2 \cdot 12 H_2O$ |
| Soda | $Na_2CO_3 \cdot 1 H_2O$ |
| Natriumacetat | $CH_3 \cdot COONa \cdot 3 H_2O$ |
| Kupfersulfat | $CuSO_4 \cdot 5 H_2O$ |
| Magnesiumsulfat | $MgSO_4 \cdot 7 H_2O$ |

Wie bereits erörtert, sind die kristallwasserhaltigen Stoffe in feingemahlener Form einzusetzen, so daß eine möglichst gleichmäßige Verteilung im Füller beziehungsweise bituminösen Mischgut erreicht wird.

Die meisten der oben angeführten kristallwasserhaltigen Stoffe vermögen das in Wärme abgespaltene Wasser bei der Abkühlung des eingebauten Belages wieder aufzunehmen. Diese ganz oder teilweise reversibel verlaufende Wasserabspaltung ist deswegen vorteilhaft, weil der durch den Dampf beziehungsweise durch das Wasser geblähte Mastix sich einerseits durch die Kondensation des Dampfes und andererseits durch die Bindung des Wassers als Kristallwasser nachverdichtet und dadurch größtenteils in das Mineralkorngemisch hineingesaugt wird. Eventueller überschüssiger Mörtel verschwindet von der Oberfläche des Belages und der Belag erhält eine rauhe Struktur, wodurch die Anfangsgriffigkeit begünstigt wird.

In der CH-PS 511 053 werden Kompositionen für ein kalt lagerfähiges, schüttfähiges und bei Temperaturen zwischen 10 und 30°C, also »kalt«, einbaufähiges Mischgut beschrieben. Ausgehend von der Aufgabe, die Staubentwicklung beim Trocknen feuchter Mineralgemische zu vermeiden, wird dort vorgeschlagen, die feuchten Mineralstoffe mit bituminösen Bindemitteln zu versetzen und dann zu erwärmen. Benetzungsschwierigkeiten sollen durch Zusatz kleiner Mengen Metallsalze, z. B. Chrom- oder Eisensalzen in gelöster Form behoben werden. Als Bindemittel können auch Bindemittelemulsionen und Zement, gegebenenfalls in Verbindung mit Eisensulfat als Beschleuniger verwendet werden.

Beispiel 1

Labormäßig wurde Mischgut mit unterschiedlichen Bitumengehalten und folgenden Zusammensetzungen hergestellt:

| | | | |
|---|---|---|---|
| Basaltsplitt | 2—5 mm | 48 | Gew.-Teile |
| Moränesplitt | 2—5 mm | 15 | Gew.-Teile |
| Moränesand | 0—2 mm | 22 | Gew.-Teile |
| Rheinsand | 0—3 mm | 5 | Gew.-Teile |
| Bitumen Sorte B 65 | | 6,4 | Gew.-Teile |
| | bzw. | 6,7 | Gew.-Teile |
| | bzw. | 7,0 | Gew.-Teile |
| Füller | | 10 | Gew.-Teile |

Dabei wurde in einer Serie als Füller reines Kalksteinmehl, in der anderen Kalksteinmehl mit 0,4 Gew.-% feinstvermahlenem Gips-Dihydrat eingesetzt. Nach Herstellung von Marshallprüfkörpern mit 2 × 50 Verdichtungsschlägen konnten an diesen folgende Prüfwerte ermittelt werden:

| | Mit Gips-Dihydrat | | |
|---|---|---|---|
| Bitumengehalt (Gew.-T.) | 6,4 | 6,7 | 7,0 |
| Hohlraumgehalt (Vol.-%) | 1,97 | 1,32 | 0,51 |
| Marshallstabilität (kN) | 10,00 | 10,50 | 9,60 |
| Fließwert (0,1 mm) | 43 | 47 | 54 |
| Stempeleindringtiefe (mm) | | | |
| b. 60° nach 60 min | 0,12 | 0,16 | 0,26 |
| b. 140° nach 10 min | 0,11 | 0,15 | 0,23 |

| | Ohne Zusatz | | |
|---|---|---|---|
| Bitumengehalt (Gew.-T.) | 6,4 | 6,7 | 7,0 |
| Hohlraumgehalt (Vol.-%) | 3,14 | 2,19 | 1,55 |
| Marshallstabilität (kN) | 8,60 | 8,40 | 8,00 |
| Fließwert (0,1 mm) | 39 | 43 | 46 |
| Stempeleindringtiefe (mm) | | | |
| b. 60° nach 60 min | 0,17 | 0,22 | 0,23 |
| b. 140° nach 10 min | 0,20 | 0,49 | 1,35 |

## Beispiel 2

In dieser Versuchsreihe wurde wie in Beispiel 1 vorgegangen. Lediglich wurde als Füller ein Kalksteinmehl eingesetzt, das 0,6% feingemahlenen Gips-Dihydrat als Zusatzstoff enthielt. Der Einfluß des Wasserdampfes zeigte sich auch in dieser Versuchsreihe:

| | | | |
|---|---|---|---|
| Bindemittel B 65 (Gew.-T.) | 6,4 | 6,7 | 7,0 |
| Hohlraumgehalt (Vol.-%) | 1,99 | 1,14 | 0,37 |
| Marshallstabilität (kN) | 10,20 | 10,80 | 9,80 |
| Fließwert (0,1 mm) | 37 | 46 | 52 |
| Stempeleindringtiefe (mm) | | | |
| b. 60° nach 60 min | 0,11 | 0,14 | 0,22 |
| b. 140° nach 10 min | 0,08 | 0,13 | 0,20 |

Aus den Meßwerten der Hohlraumgehalte läßt sich der verdichtungsbegünstigende Einfluß der erfindungsgemäßen Zusatzstoffe ableiten. Die Hohlraumgehalte sinken bei gleicher Verdichtungsarbeit je nach Mischgut um 40 – 75%. Dabei wird die Marshallstabilität durch die dichtere Kornlagerung um 20 – 25% angehoben. Überraschend sind jedoch die Ergebnisse hinsichtlich der Verformungsbeständigkeit gegenüber dem Druckstempel, insbesondere bei der Prüftemperatur von 140°C. Hieraus läßt sich die sofortige Befahrbarkeit des frisch verlegten Belages auch bei Temperaturen von 80 – 100°C ableiten, in Übereinstimmung mit der praktischen Erprobung.

## Beispiel 3

Es wurde nach der Rezeptur des Beispiels 1 ein Mischgut hergestellt mit der Maßgabe, daß das Gips-Dihydrat nicht in Mischung mit dem als Füller verwendeten Ka'ksteinmehl gemischt eingesetzt wurde, sondern in Mischung mit dem Rheinsand.

Die Prüfwerte des so hergestellten Mischgutes entsprachen denen nach Beispiel 1.

## Beispiel 4

Es wurde ein Mischgut nach der Rezeptur des Beispieles 2 hergestellt mit der Maßgabe, daß die vorerhitzten Mineralkörnungen nach Zugabe des Füllers durchmischt, unter weiterem Durchmischen das heiße Bitumen zugegeben und während weiteren Durchmischens das Gips-Dihydrat in feingemahlener Form zugesetzt wurde.

Die Prüfwerte des so hergestellten Mischgutes entsprachen denen des Beispieles 2.

Die Temperaturangaben dieser Anmeldung sind in °C angegeben.

## Patentansprüche

1. Heiß zu verarbeitendes bituminöses Mischgut, insbesondere für den Straßenbau, gekennzeichnet durch die Verwendung von nichthygroskopischen, kristallwasserhaltigen Stoffen, die beim Erhitzen des Mischgutes auf Mischtemperatur ganz oder teilweise ihr Kristallwasser abgeben, als Zusatzstoffe.

2. Mischgut nach Anspruch 1, gekennzeichnet durch die Verwendung von Gips-Dihydrat ($CaSO_4 \cdot 2\ H_2O$).

3. Mischgut nach den Ansprüchen 1 oder 2, gekennzeichnet durch die Verwendung von nichthygroskopischen, kristallwasserhaltigen Stoffen in solchen Mengen, daß deren bei Mischtemperatur abspaltbare Wassermenge 0,005 bis 0,1 Gew.-%, vorzugsweise 0,01 bis 0,03 Gew.-% auf das Mischgut bezogen beträgt.

4. Mischgut nach den Ansprüchen 1, 2 oder 3, gekennzeichnet durch die Verwendung der nichthygroskopischen, kristallwasserhaltigen Zusatzstoffe als Mischung mit feinkörnigen, insbesondere mineralischen Stoffen.

5. Füller für heiß zu verarbeitendes bituminöses Mischgut, insbesondere für den Straßenbau, dadurch gekennzeichnet, daß er nichthygroskopische, kristallwasserhaltige Stoffe enthält, die beim Erhitzen des Füllers als Bestandteil des bituminösen Mischgutes auf Mischtemperatur ganz oder teilweise ihr Kristallwasser abgeben.

6. Füller nach Anspruch 5, dadurch gekennzeichnet, daß er nichthygroskopische, kristallwasserhaltige Stoffe enthält, die oberhalb der Einbautemperatur des bituminösen Mischgutes Wasser abgeben.

7. Füller nach den Ansprüchen 5 oder 6, dadurch gekennzeichnet, daß er nichthygroskopische, kristallwasserhaltige Stoffe enthält, deren freiwerdende Wassermenge 0,05 bis 1 Gew.-%, vorzugsweise 0,1 bis 0,3 Gew.-%, bezogen auf das Gewicht des Füllers, beträgt.

8. Füller nach einem der Ansprüche 5 bis 7, dadurch gekennzeichnet, daß das Wasser bei Temperaturen zwischen 80 und 160°C abgegeben wird.

9. Füller nach einem der Ansprüche 5 bis 8, dadurch gekennzeichnet, daß er Gips-Dihydrat ($CaSO_4 \cdot 2 H_2O$) enthält.

10. Füller nach Anspruch 5, dadurch gekennzeichnet, daß er nichthygroskopische, kristallwasserhaltige Stoffe enthält, die das abgegebene Wasser reversibel zu binden vermögen.

## Claims

1. A bituminous mix intended for hot laying, particularly for road building, characterised by the use as additives of non-hygroscopic substances containing water of crystallisation which give off all or part of their water of crystallisation when the mix is heated to the mixing temperature.

2. A mix as claimed in Claim 1, characterised by the use of gypsum dihydrate ($CaSO_4 \cdot 2 H_2O$).

3. A mix as claimed in Claim 1 or 2, characterised by the use of non-hygroscopic substances containing water of crystallisation in such quantities that the quantity of water which they are capable of giving off at the mixing temperature amounts to between 0.005 and 0.1% by weight and preferably to between 0.01 and 0.03% by weight, based on the mix.

4. A mix as claimed in Claim 1, 2 or 3, characterised by the use of the non-hygroscopic substances containing water of crystallisation in the form of a mixture with finely particulate, particularly mineral substances.

5. A filler for a bituminous mix intended for hot laying, particularly for road building, characterised in that it contains non-hygroscopic substances containing water of crystallisation which give off all or part of their water of crystallisation when the filler, as part of the bituminous mix, is heated to the mixing temperature.

6. A filler as claimed in Claim 5, characterised in that it contains non-hygroscopic substances containig water of crystallisation which give off water above the laying temperature of the bituminous mix.

7. A filler as claimed in Claim 5 or 6, characterised in that it contains non-hygroscopic substances containing water of crystallisation of which the quantity of water released amounts to between 0.05 and 1% by weight and preferably to between 0.1 and 0.3% by weight, based on the weight of the filler.

8. A filler as claimed in any of Claims 5 to 7, characterised in that the water is given off at temperatures in the range form 80 to 160°C.

9. A filler as claimed in any of Claims 5 to 8, characterised in that it contains gypsum dihydrate ($CaSO_4 \cdot 2 H_2O$).

. 10. A filler as claimed in Claim 5, characterised in that it contains non-hygroscopic substances containing water of crystallisation which are capable of reversibly binding the water given off.

## Revendications

1. Matériaux enrobés bitumineux à traiter à chaud, notamment pour travaux routiers, caractérisés par l'utilisation de matériaux non hygroscopiques, contenant de l'eau de cristallisation, qui fournissent leur eau de cristallisation, totalement ou en partie, en tant que produit d'addition, lors du chauffage des matériaux enrobés à la température d'enrobage.

2. Matériaux enrobés selon la revendication 1, caractérisés par l'utilisation de plâtre bihydraté ($CaSO_4, 2 H_2O$).

3. Matériaux enrobés selon les revendications 1 ou 2, caractérisés par l'utilisation de matériaux non hygroscopiques, contenant de l'eau de cristallisation, en ce que leur quantité d'eau s'éliminant à la température d'enrobage est de 0,005 à 0,1% en poids, de préférence de 0,01 à 0,03% en poids, en se référant aux matériaux enrobés.

4. Matériaux enrobés selon les revendications 1, 2 ou 3, caractérisés par l'utilisation des matériaux non hygroscopiques contenant de l'eau de cristallisation en mélange avec des matériaux à grains fins, notamment des matières minérales.

5. Filler pour matériaux enrobés bitumineux à traiter à chaud, notamment pour travaux routiers, caractérisé en ce qu'il contient des matériaux non hygroscopiques contenant de l'eau de cristallisation, qui fournissent leur eau de cristallisation, totalement ou en partie, lors du chauffage du filler, en tant qu'élément constituant des matériaux enrobés bitumineux, à la température d'enrobage.

6. Filler selon la revendication 5, caractérisé en ce qu'il contient des matériaux non hygroscopiques contenant de l'eau de cristallisation, qui fournissent de l'eau au-dessus de la température de mise en place des matériaux enrobés bitumineux.

7. Filler selon les revendications 5 ou 6, caractérisé en ce qu'il contient des matériaux non hygroscopiques contenant de l'eau de cristallisation, dont la quantité d'eau devenant libre est de 0,05 à 1% en poids, de préférence de 0,1 à 0,3% en poids, en se référant au poids du Filler.

8. Filler selon l'une des revendications 5 à 7, caractérisé en ce que l'eau est fournie à des températures comprises entre 80 et 160°C.

9. Filler selon l'une des revendications 5 à 8, caractérisé en ce qu'il contient du plâtre bihydrate ($CaSO_4, 2 H_2O$).

10. Filler selon la revendication 5, caractérisé en ce qu'il contient des matériaux non hygroscopieques contenant de l'eau de cristallisation que permettent de lier de façon réversible l'eau fournie.